# EUROPEAN PATENT APPLICATION

(11) **EP 2 657 203 A1**
(43) Date of publication of application: **30.10.2013**
(21) Application number: 12165943.7
(22) Date of filing: 27.04.2012
(51) Int. Cl.: C03C 25/34, E04B 1/74, C08G 8/10, C08L 61/06

(54) **Process for the production of a phenol-formaldehyde resin having low free-formaldehyde content, the phenol-formaldehyde resin resulting from this process, and its use as a binder for mineral wool insulation products**

(71) Applicant: URSA Insulation, S.A., 28004 Madrid (ES)
(72) Inventor: Castro-Cabado, Maria Mercedes, 28050 Madrid (ES); Sanchez Perucha, Alejandro, 28046 Madrid (ES); Aznar Écija, Ana Isabel, 43004 Tarragona (ES); Casado Dominguez, Arturo Luis, 28860 Paracuellos de Jarama Madrid (ES)
(74) Representative: HOFFMANN EITLE

(57) **Abstract**

The present invention relates to a method of reducing the content of free formaldehyde in phenol-formaldehyde resins, wherein this method comprises the step of treating the phenol-formaldehyde resin starting material with at least one oxidizing agent. The present invention further relates to the phenol-formaldehyde resin resulting from this process and its use as a binder in the manufacture of mineral wool insulation products of low formaldehyde emissions. The resulting phenol-formaldehyde resin has a free formaldehyde content of lower than 0.5 weight % determined according to ISO 11402; the pH is in the range of 7 to 10, the dilutability is more than 20 times in demineralized water at 20 °C, the viscosity is below 100 mPa.s at 20 °C, and the phenol-formaldehyde condensates, contained in the resin, consist of phenol and formaldehyde.

## Description

The present invention relates to a method of reducing the content of free formaldehyde in phenol-formaldehyde resins. The present invention further relates to the phenol-formaldehyde resin resulting from this process and its use as a binder in the manufacture of mineral wool insulation products of low formaldehyde emissions.

### State of the Art

The mineral wool products have traditionally being manufactured by welding glass fibers by means of phenol-formaldehyde resins, profiting from a relatively low cost and the good mechanical properties, stability and water resistance granted to the finished products. Most common phenol-formaldehyde resins for mineral wool production are *resols* manufactured by condensation of formaldehyde and phenol catalyzed by strong alkalis and using a large molar excess of the formaldehyde. These resins contain from about 45 to about 55 % weight solid content, and from about 2 to 8 weight % of free formaldehyde.

For a good processability, these phenol-formaldehyde resins should have a good stability, good dilutability with water, normally above 20 times measured by the method ISO 8989 method, a viscosity below 100 mPa.s to facilitate the application on the glass fibers, and a suitable curing rate, between 3-15 minutes measured by the B-time method ISO 8987 method. Preferably, the resins shall have a pH greater than 7 to avoid or minimize potential corrosion issues on carbon steel equipment.

The main drawback of the phenol-formaldehyde resins is the slow release of formaldehyde in finished products to the environment, contributing to worsen the indoor air quality; hence there is a great desire of producing phenol-formaldehyde resins with a low free FA content, helping to reduce emissions of formaldehyde from mineral wool products. Different methods to reduce free formaldehyde in phenolic resins have been described.

One group of methods refers to the use of formaldehyde scavengers which reacts with the free formaldehyde in the resin. For instance, EP 0 148 050 A1 describes the use of urea as formaldehyde scavenger by formation of formaldehyde-urea condensates. This method is useful to decrease the level of free formaldehyde in phenol-formaldehyde resins. Nevertheless the formed adducts can reversibly regenerate free formaldehyde during the curing process of the resin and/or the after curing due to the aging. Furthermore, the US 2011/111226 A1 describes the use of substances with active methylene groups as formaldehyde scavengers. These methods are also useful to the goal of reducing free formaldehyde. However, the required reaction conditions are harsh, leading to higher condensation in the resin which may then suffer from reduced stability and water dilutability.

A second set of solutions consists of the use of a compound able to form condensates with both phenol and formaldehyde. For example, WO 2008/043961 A1 describes the use of monoethanolamine that reacts with free formaldehyde and phenol via Mannich reaction. It is described that this method decreases the free formaldehyde in the resin. However, it requires the use of relatively high temperatures, normally around 60 °C, what makes the resin condensates to acquire a high degree of condensation during the process. Consequently, the thermal stability of the resins is seriously compromised and they tend to generate precipitates over time. Further, their dilutability in water is also significantly reduced, complicating their processability in the manufacturing plants. A way to increase the stability of such of such high condensed resins would be to reduce their pH by means of organic acids such as sulfamic acid. However, such low pH has negative effects on carbon steel plant installations due to corrosion and requires expensive investments to upgrade installations with stainless steel materials.

Furthermore, the method described in WO 2012/25699 A1 relates to a method for reducing free formaldehyde in resins using glycine as formaldehyde scavenger. The latter overcomes the need of using the acid to achieve resin stabilization but the process still requires relatively high reaction temperatures making the process difficult to undertake in glass wool manufacturing plants.

A third group of solutions consist of the treatment of the mineral wool product with formaldehyde scavengers which reacts with the free formaldehyde being issued from the fleece. For instance, the method described in WO 2008/005635 A2 consists of the use of sodium bisulfite, sodium metabisulfite and tetraethylenepentamine as formaldehyde scavengers. Another method disclosed in WO 2011/148076 A1 consists of the use of dihydrazides as formaldehyde scavengers. These methods can decrease the measured emissions of formaldehyde from mineral wool products although the efficiency is limited. Additionally, the use of hydrazides is significantly limited due to its hazardousness, difficulty in handling and price.

### Description of the invention

It is an object of the present invention to provide a new process for reducing the content of free formaldehyde in a phenol-formaldehyde resin to an amount below 0.5 weight % measured by method ISO 11402. This process has the advantage that it effectively reduces the content of free formaldehyde in the phenol-formaldehyde resin but, at the same time, does not significantly impact the stability, dilutability in water, viscosity and reactivity of the phenol-formaldehyde-resin used as starting material. Moreover, the process can be undertaken with good efficiencies at a pH in the range of 7 or higher, in particular in the range of 7 to 10.

In contrast to the formaldehyde reducing processes described in the art, the process of the present invention is particularly valuable in the manufacture of binders used for glass wool insulation products because:
(1) The treatment of the phenol-formaldehyde resin involves easy to handle and inexpensive chemicals, and can be undertaken at around ambient temperature at a suitable rate. Consequently, the process can be done at the own glass wool manufacturing premises without major investments, and the resulting resin can be consumed *in situ,* avoiding long storage and transportation stability requirements; and
(2) The unwanted corrosion damage of carbon steel production equipment can be minimized due to the high pH of the resulting resin.

It is a further object of the present invention to provide a novel phenol-formaldehyde resin that has a low amount of free formaldehyde, is non-corrosive, shows excellent reactivity and excellent suitability for its use as a binder of mineral wool products.

According to the present invention, the process for reducing the content of free formaldehyde in phenol-formaldehyde resins comprises the step of treating a phenol-formaldehyde resin with at least one oxidizing agent, wherein the pH of the phenol-formaldehyde resin starting material and the resin obtained after the treatment is 7 or higher, in particular 7-10, a dilutability of more than 20 times in demineralized water, a viscosity lower than 100 mPa.s at 20 °C, and a curing B-time between 3-15 minutes.

The phenol-formaldehyde resin that is used as a starting material for the process of the present invention is a *resol* produced by condensation of formaldehyde and phenol in a formaldehyde:phenol molar ratio greater than 1.1, preferably greater than 1.8 and more preferably greater than 2. Usually, the formaldehyde:phenol molar ratio in the phenol-formaldehyde used as starting material in the process of the present invention is not greater than 3. The condensation process for preparing the phenol-formaldehyde resin starting materials is usually catalyzed by NaOH, KOH or Ca(OH)₂ most preferably NaOH. The pH of the phenol-formaldehyde resin starting material is usually from 7 to 10.

According to a preferred embodiment, the phenol-formaldehyde resin used as a starting material is an aqueous solution composed of from 5 to 70 weight %, more preferable from 40 to 65 weight %, and most preferably from 45 to 55 % weight of said phenol-formaldehyde *resol* condensates.

According to an even more preferred embodiment, the phenol-formaldehyde resin used as a starting material in the present invention contains from about 5 to 8.5% weight of free formaldehyde, determined by the method ISO 11402. Such resin is characterized in that it can be diluted with more than 10 parts of demineralized water, in particular more than 20 parts, determined by the method ISO 8989. This is normally referred as 'infinite' dilutability in water. Particular examples of preferred phenol-formaldehyde resins used as a starting material in the present invention are Bakelite PF 1230V from Momentive or Borofen B-1606A supplied by Fenolit.

The oxidizing agent may be any oxidizing agent that is known in the art and that is able to oxidize formaldehyde. Preferably, the oxidizing agent is selected from the group consisting of hydrogen peroxide, alkali and earth alkaline metal peroxide salts, alkali metal and ammonium persulfate, alkali metal and ammonium percarbonates, alkali metal and ammonium perborates, organic peroxyacids and their alkali metal and ammonium salts, sodium hypochlorite, chlorine, bromine, iodine, oxygen, ozone and mixtures thereof. It is especially preferred to use hydrogen peroxide, ammonium persulfate, sodium percarbonate, sodium perborate, peracetic acid or performic acid as the oxidizing agent. Moreover, it is particularly preferred to use as an oxidizing agent a solution of hydrogen peroxide of about 30 weight %. Hydrogen peroxide is most preferred due to the suitability of its redox potential to selectively oxidize formaldehyde, the relatively easy dosing and handling, and affordable cost. These oxidizing agents may be used alone or in combination of two or more.

The amount of oxidizing agent is not particularly limited, but it is preferred to use from 1 to 3 mol of oxidizing agent per mol of free formaldehyde in the phenol-formaldehyde resin used as starting material, more preferably from 2 to 2.5 mol of oxidizing agent per mol of free formaldehyde in the phenol-formaldehyde resin used as starting material. This amount of oxidizing agent is very suitable to achieve the oxidation of the free formaldehyde in the phenol-formaldehyde resin without deteriorating the reactivity of the resin.

The process of the present invention is not particularly limited to any reaction temperature. However, it is preferred to carry out the process at a temperature of 5 to 60 °C, more preferable from 15 to 45 °C, and most preferably from 20 to 30 °C. At this temperature the oxidation of the free formaldehyde occurs at reasonable rate without deteriorating the resin.

The contact time of the phenol-formaldehyde resin with the oxidizing agent is not particularly limited. However, it is suitable to use a contact period of 1 to 180 minutes, more preferable for about 10 minutes and 120 minutes, and most preferably from 30 to 90 minutes.

During the process of the present invention the pH shall be kept at pH 7 or above to better control the rate and selectivity of the oxidation and to avoid corrosion of carbon steel equipment down the manufacturing line. The pH may naturally decrease due to the formation of formic acid and/or CO₂, but usually it stays higher than pH 7. However, if necessary, the pH may be increased by means of the concomitant addition of a diluted NaOH solution.

In the case of hydrogen peroxide, the inventors surprisingly found a pH between 7.5 and 8.5 to particularly suitable.

The phenol-formaldehyde resin that is obtained by the process according to the present invention has a content of free formaldehyde of below 0.5 weight %, measured according to the ISO 11402 method. The viscosity of the resulting phenol-formaldehyde resin is below 100 mPa.s at 20 °C (e.g. measured with a Brookfield viscometer, spindle 1, 60 rpm). Furthermore, the phenol-formaldehyde resin obtained by the process according to the present invention has an excellent dilutability in water measured by ISO 8989 method of more than 20 times in demineralized water at 20 °C. The resulting phenol-formaldehyde resin has also an excellent curing behavior in terms of B-time, as determined by the B-time method (ISO 8987). More particularly, the B-time of the resulting resin is in the range of 3 to 15 minutes which is in the same range compared to the untreated phenol-formaldehyde resin, i.e. the phenol-formaldehyde resin used as starting material. Finally, the resulting phenol-formaldehyde resin shows negligible impact on corrosion of carbon steel equipment down the manufacturing line due to its pH of 7 or higher, in particular due to its pH of 7-10.

A particular feature of the process of the present invention is that the phenol-formaldehyde condensates contained in the resulting phenol-formaldehyde resin do not contain any other components than phenol and formaldehyde, i.e. the condensates in the phenol-formaldehyde resin essentially consist of phenol and formaldehyde.

The phenol-formaldehyde resin as obtained by the process according to the present invention described above is to be used for the preparation of a binder composition for fibrous substrates, particularly mineral wool fibers. Such a binder composition for mineral wool fibers comprises the phenol-formaldehyde resin as obtained by the process according to the present invention and at least one additive such as, but not limited to, urea, latent acid catalysts such as ammonium sulfate, sodium bisulfite, hydrophobizing agent such as silicones, de-dusting agent such as paraffin oils, adhesion promoter agent such as silanes, fiber softener, dyes and corrosion inhibitors. It is preferred that said composition additionally comprises of at least one chain extender such as, but not limited to, sugars, molasses, starches and modified starches, lignosulfonates or tannins.

The resulting mineral wool fiber products show a formaldehyde emission below 20 µg/m³ (method ISO 16000-3), more preferable lower than 15 µg/m³ and most preferable lower than 10 µg/m³.

The mineral wool product may comprise at least additional facing made of paper, aluminum, glass veil or mixtures thereof. The mineral wool obtained may be used for thermal or acoustic insulation purposes in buildings, conducts, particularly air-conditioning conducts, electrical appliances, ships, aircrafts and spaceships.

### Example

A 1-L round bottom flask equipped with a mechanical stirred and a thermostatic bath, was charged with 150 grams of phenol-formaldehyde resin Borofen B-1606A supplied by Fenolit, of 47 weight % solids. The content of free formaldehyde of this resin measured with the method ISO 11402 was 6.91 weight % (0.345 mol). The solution is then treated with 80 grams of hydrogen peroxide at 30 weight % (0.70 mol). The mixture is then stirred at 25 °C for 60 minutes obtaining a pale yellow solution of Resin A. The main properties of the produced resins are in the Table 1.

**Table 1: Properties of phenol-formaldehyde resin with reduced content of free formaldehyde**

| | Untreated Resin | Resin A |
|---|---|---|
| Free formaldehyde (% weight) ⁽¹⁾ | 6, 9 (ref) | 0,40 |
| Dilutability in water (2) | >20 | >20 |
| pH | 8.9 | 7.0 |
| Corrosion carbon steel (mm/year) | < 0.1 | < 0.1 |
| Viscosity (mPa.s) ⁽³⁾ | 30 | 10 |
| B-time (min) ⁽⁴⁾ | 7.5 | 7.0 |
| Modulus of impregnated glass paper (N.m) ⁽⁵⁾ | 628 | 610 |
| Modulus of impregnated glass paper after aging (N.m) ⁽⁶⁾ | 524 | 497 |

| | | |
|---|---|---|
| (1) ISO 11402 (2) ISO 8989 (3) measured with a Brookfiled viscometer, spindle 1, 60 rpm, at 20 °C (4) ISO 8987 (5) Load 20% solids, cured 3 min at 170 °C (6) Method in (5) followed by immersion in water for 10 min at 85 °C. | | |

## Claims

1. A process for reducing the content of free formaldehyde in a phenol-formaldehyde resin starting material, comprising the step of treating the phenol-formaldehyde resin starting material with at least one oxidizing agent, wherein the pH of the phenol-formaldehyde resin starting material and the resin obtained after the treatment is 7 or higher.

2. The process according to claim 1, wherein the said oxidizing agent is selected from one or more of hydrogen peroxide, ammonium persulfate, sodium percarbonate, sodium perborate, peracetic acid and performic acid.

3. The process according to claim 1 or 2, wherein the process is carried out at a temperature of 15 to 45 °C.

4. The process according to claim 3, wherein the process is carried out at a temperature of 20 to 30 °C.

5. The process according to any one of claims 1-4 wherein the time of said treatment is 1 to 180 minutes.

6. A phenol-formaldehyde resin **characterized in that**:
- the free formaldehyde content is lower than 0.5 weight % determined according to ISO 11402;
- the pH is in the range of 7 to 10;
- the dilutability is more than 20 times in demineralized water at 20 °C;
- the viscosity is below 100 mPa.s at 20 °C, and
- the phenol-formaldehyde condensates, contained in the resin, consist of phenol and formaldehyde.

7. Use of the phenol-formaldehyde resin according to claim 6 for the preparation of a binder composition for mineral wool products.

8. A mineral wool product produced with the phenol-formaldehyde resin according to claim 6.

9. The use of mineral wool product according to claim 8 for thermal or acoustic insulation purposes in buildings, conducts, electrical appliances, ships, aircrafts and spaceships
